# EUROPÄISCHE PATENTANMELDUNG

(11) **EP 0 816 040 A2**
(43) Veröffentlichungstag der Anmeldung: **07.01.1998**
(21) Anmeldenummer: 97109459.4
(22) Anmeldetag: 11.06.1997
(51) Int. Cl.: B29C 33/62

(54) **Verhinderung der elektrostatischen Aufladung von Luftreifen**

(30) Priorität: 24.06.1996 DE 19625091
(71) Anmelder: RHEIN-CHEMIE RHEINAU GmbH, 68219 Mannheim (DE)
(72) Erfinder: Wagner, Herbert, 69669 Bad Schönborn (DE)
(74) Vertreter: Steiling, Lothar, Dr.

(57) **Zusammenfassung**

Wäßriges Außentrennmittel für Luftreifen, das einen Fettalkohol-Polyglykolether und leitfähigen Ruß enthält, zur Herstellung des elektrischen Widerstandes des Reifens.

## Beschreibung

Luftreifen, die statt Ruß als Füllstoff im wesentlichen bestimmte Silicatfüllstoffe enthalten, besitzen überlegene Lauf- und Abriebeigenschaften. Solche rußfreien Reifen - auch "Green tires" genannt - neigen aber dazu, sich elektrostatisch aufzuladen, weil ihr elektrischer Widerstand erheblich größer und damit ihre elektrische Leitfähigkeit erheblich kleiner ist als die von rußhaltigen Reifen. Die elektrostatische Aufladung von Reifen und - bei hohem Widerstand - das Verhindern des Abfließens elektrischer Ladungen vom Fahrzeug zur Erde kann zu erheblichen Störungen und Gefährdungen führen, wenn eine vorhandene elektrische Ladung durch eine leitende Verbindung zur Erde abfließt. Beispielsweise kann eine solche Verbindung durch eine ein- oder aussteigende Person oder durch das Einführen eines Tankschlauches hergestellt werden.

Rußhaltige Luftreifen haben im allgemeinen einen Widerstand von ca. 10⁶ Ohm, gemessen vom Zenit bis zum Wulst. Für diese Messung gibt es eine vorläufige Vorschrift, die in der WDK-Leitlinie 110 festgelegt ist. Danach ist ein Luftreifen "elektrostatisch wirksam Klasse I", wenn er einen Ableitwiderstand unter 10⁶ Ohm hat.

Rußfreie Luftreifen erfüllen diesen Test nicht; ihr elektrischer Ableitwiderstand ist ca. 10¹⁰ Ohm. Wie oben dargelegt, kann dies zu erheblichen Problemen führen. Es besteht also ein Bedürfnis nach einer Methode zur Herabsetzung des elektrischen Widerstandes.

Bei der Formung und Vulkanisation von Luftreifen verteilt man auf der Oberfläche der Reifenrohlinge eine Lösung, die nach Antrocknen einen Film bildet, durch den das Anbacken der Reifen an der Vulkanisationsform verhindert wird. Man unterscheidet Außentrennmittel und Innentrennmittel jeweils für die Außen- und die Innenseite des Reifens. Zwei verschiedene Mittel sind deshalb erforderlich, weil Außenseite und Innenseite des Reifens aus verschiedenen Materialien bestehen bzw. die Anforderungen an die Trennmittel bei der Vulkanisation verschieden sind. Viele Außentrennmittel sind auf der Basis organischer Lösungsmittel hergestellt. Es ist aber von erheblichem Vorteil ein Außentrennmittel auf Wasserbasis einzusetzen. Ein solches Mittel ist in der Deutschen Offenlegungsschrift 43 43 818 beschrieben. An ein solches Trennmittel werden ganz erhebliche Anforderungen gestellt. Es muß eine Formtrennwirkung haben, darf aber gleichzeitig den Verbund zwischen verschiedenen Teilen des Reifens, z.B. Karkasse und Lauffläche, nicht beeinträchtigen. Ein optimales Außentrennmittel erfüllt daneben noch weitere Funktionen: Es leitet zwischen Form und Reifenoberfläche eingeschlossene Luftbläschen ab, die sonst eine ungleichmäßge Vulkanisation verursachen können und es begünstigt das Fließen des noch unvulkanisierten Kautschuks, so daß die Form vollständig ausgefüllt wird. Schließlich sorgt das Trennmittel auch für eine optisch ansprechende Beschaffenheit des fertigen Reifens.

Der vorliegenden Erfindung liegt die Erkenntnis zugrunde, daß man wäßrige Außentrennmittel zur Herstellung von Luftreifen so modifizieren kann, daß sie zusätzlich den elektrischen Widerstand auf einen Wert um 10⁶ Ohm senken.

Gegenstand der Erfindung ist ein wäßriges Außentrennmittel zur Herstellung von Luftreifen, das einen Fettalkohol-Polyglykolether und elektrische leitfähige Ruße enthält. Fettalkohol-Polyglykolether (im folgenden auch abgekürzt Ether) und Ruße ergeben einen positiven Synergie-Effekt. Der Ether ist bevorzugt ein Umsetzungsprodukt aus einem Alkylalkohol mit 16 bis 18 Kohlenstoffatomen und Ethylenglykol oder Propylenglylkol, worin auf ein Mol des C₁₆-C₁₈-Alkohols 5 bis 80 mol Ethylen- oder Propylenglykol kommen. Bei dem Ruß handelt es sich um leitfähigen Furnace-Ruß mit Teilchen eines mittleren Durchmessers von 20 bis 30 nm. Das Außentrennmittel enthält i.a. 1 bis 20 Gew.-% des Ethers und 3 bis 15 % des genannten Rußes. Es wird i.a. in einer solchen Menge angewendet, daß pro PKW-Reifen etwa 12 bis 30, bevorzugt 15 bis 25 g Trennmittel, entsprechend etwa 0,15 bis 5 g Ether und 0,45 bis 5 g Furnace-Ruß vorhanden sind.

Alle Versuche, die genannten Additive in die Laufflächenmischungen einzubringen, um die gewünschten Leitwerte zu erreichen, brachten keinen Erfolg, da dabei die Reifenqualität schlechter wurde.

Bevorzugt hat das erfindungsgemäße Außentrennmittel folgende Zusammensetzung:

| Anteile Gew.-% | |
|---|---|
| 3 - 20 | Amorphes Kieselgelpulver mit 3 - 70 % Kristallwasser, vorzugsweise mit 65 % |
| | mittlerer Teilchendurchmesser 15 bis 30 µm, bevorzugt 20 µm |
| 0,2 - 0,5 | Pyrogene Kieselsäure |
| | mittlerer Teilchendurchmesser 8 bis 20 nm, bevorzugt 12 nm |
| 1 - 20 | Furnace-Ruß (Pulver, leitfähig) |
| | mittlerer Teilchendurchmesser 20 - 30 nm |
| | (kann durch Rußdispersion ersetzt werden) |
| oder | |
| 4 - 70 | Furnace-Rußdispersion (leitfähig) |
| | 25 % Furnace-Ruß, mittlerer Teilchendurchmesser 20 - 30 nm |
| | 6 % Netzmittel nichtionisch |
| | 69 % Wasser |
| 0,3-15 | (berechnet als SiO₂) |
| | Kieselsol 15 - 20 Gew.-% |
| | SiO₂ Oberfläche 50 - 500 m²/g, bevorzugt 200 m²/g |
| | Teilchendurchmesser 6 - 40 nm |
| 0 - 8 | Polyethylendispersion 25 %ig (als Bindemittel) |
| 1 - 20 | Fettalkoholpolyglykolether, vorzugsweise C₁₆-C₁₈ -Alkohol + 5 Mol EO/Mol bis C₁₆-C₁₈-Alkohol + 80 Mol EO/Mol (nichtionisches Tensid zur Herstellung der Leitfähigkeit und der Dispergier- und Bindemittel) |
| 0,2 - 10 | Calciumligninsulfonat (Netz, Dispergier- und Bindemittel) |
| 0,1 - 3 | Fettsäuremethyltaurid-Natriumsalz (Netz-, Dispergier- und Bindemittel) |
| 0 - 5 | Entschäumer |
| 0,01 - 0,05 | Biocid |
| 30 - 80 | Wasser |

Ein besonders bevorzugtes Produkt zur Beschichtung der Reifenrohlinge hat die folgende Zusammensetzung:

| Anteile Gew.-% (allgemein) | Anteile Gew.-% (speziell) | |
|---|---|---|
| Füllstoffe | | |
| 3 - 20 | 8,75 | amorphes Kieselgelpulver mit ca. 65 % Kristallwasser mittlerer Teilchendurchmesser 20 µm (Daraclar 920) |
| 0 - 2 | 0,5 | pyrogene Kieselsäure mittlerer Teilchendurchmesser 12 nm |
| | | (Aerosil 200) |
| 1 - 20 | 4,5 * | Furnace-Ruß (leitfähig) (Printex 3 oder Printex V) |
| oder | | |
| 4 - 70 | 19 * | 25 %ige Furnace-Rußdispersion (leitfähig) (Derussol AN 1/25 L) |
| 0,3-15 | | (berechnet als SiO₂) Kieselsol 15 - 20 Gew.-% SiO₂ Oberfläche 50 - 500 mg²/g, bevorzugt 200 m²/g, mittlerer Teilchendurchmesser 6 -40 nm |
| 0 - 8 | 4 | 25 %ige Polyethylendispersion (Permaid DI) |

| Antistatikum und Dispergiermittel | | |
|---|---|---|
| 1 - 20 | 7,25 * | Fettalkohol-Polyglykolether (C₁₆-C₁₈-Alkohol + 6 Mol EO/Mol) (Rhenosin RC 100) |

| Netz- und Dispergiermittel | | |
|---|---|---|
| 0,2 - 10 | 2 | Calciumligninsulfonat |
| 0,1 - 3 | 1,5 | Fettsäuremethyltaurid-Natriumsalz |

| Entschäumer | | |
|---|---|---|
| 0,5 | 0,15 | Triisoburylphosphat (Etingal A) |

| Biocid | | |
|---|---|---|
| 0,01 - 0,05 | 0,02 | 1,2-Benzisothiazoline-3-on (Proxel GXL) |

| Wasser | | |
|---|---|---|
| 30 - 80 | 58,83 | Wasser |

Die elektrostatische Wirksamkeit beruht im wesentlichen auf den Fettalkoholglykolethern und leitfähigem Furnace-Ruß, die zusammen einen positiven Synergie-Effekt ergeben.

### Beispiel 1

### Zusammensetzung des Trennmittels:

| Gew. Teile | |
|---|---|
| 62,03 | Wasser |
| 0,10 | Kelzan D |
| 0,70 | Fettsäuremethyltaurid-Natriumsalz (Hostapon CT-Teig) |
| 2,00 | Calciumligninsulfonat |
| 8,75 | amorphes Kieselgelpulver, |
| | 65% Kristallwasser, mittl. Teilchendurchmesser 20 µm (Daraclar 920) |
| 0,50 | Pyrogene Kieselsäure, mittl. Teilchendurchmesser 12 µm (Aerosil 200) |
| 7,00 | Furnace Ruß (Printex L) |
| 4,00 | 25%-ige Polyethylendispersion (Permaid DI) |
| 7,25 | Fettalkohol-polyglykolether (C₁₆-C₁₈-Alkohol* 6 Mol Ethylenglykol/Mol) (Rhenosin RC 100) |
| 7,50 | Kieselsol 30 Gew.-% SiO₂ 200 m²/g, Teilchengröße 7-15 nm (Levasil 200 A 30) |
| 0,02 | 1,2-Benzinisothiazolin-3-on (Proxel GXL) |
| 0,15 | Triisobuthylphosphat (Etingal A) |

### Herstellung:

Das Wasser wird vorgelegt und danach die Wirkbestandteile in der oben angegebenen Reihenfolge eines nach dem anderen zugegeben und jeweils 10 - 15 Minuten nachgerührt. Die erhaltene Suspension wird durch ein Sieb mit einer Maschenweite von 200 µm gegeben. Sie ist danach direkt sprühfähig.

### Anwendung:

In einem Produktionsversuch wurden ca. 50 000 PKW-Reifen, deren Laufflächen mit Silicafüllstoffen hergestellt waren, in üblicher Weise vor der Vulkanisation mit diesem Mittel eingesprüht, wobei pro Reifen 20 g der Lösung, entsprechend ca. 6 - 7 g Feststoff, verwendet wurden. Sämtliche Reifen hatten einen elektrischen Widerstand im Bereich von 10⁶ Ohm.

### Beispiel 2

### Sprühlösung zur Oberflächenbehandlung von extrudierten Laufflächen

| Anteile Gew.-% | % |
|---|---|
| 1 - 15 | Furnace-Ruß (Pulver, leitfähig) mittlerer Teilchendurchmesser 20 - 30 nm |
| oder | |
| 4 - 50 | Furnace-Rußdispersion (leitfähig) 25 % Ruß, 6 % Netzmittel nichtionisch 69 % Wasser |
| 1 - 6 | Fettalkoholpolyglykolether vorzugsweise C₁₆-C₁₈-Alkohol + 6 mol ED/Mol bis |
| | C₁₆-C₁₈-Alkohol + 80 mol ED/Mol |
| 0,5 - 15 | Kieselsol 15 - 50 Gew.-% SiO₂ (berechnet als SiO₂) 50 - 500 m²/g spezifische Oberfläche |
| | 6 - 40 nm mittlerer Teilchendurchmesser, vorzugsweise 200 m²/g spezifische Oberfläche, 40 nm mittlerer Teilchendurchmesser, bevorzugt 7 - 15 nm. Das Kieselsol ist ein kühlwasserbeständiges Bindemittel |
| 0,01 - 0,2 | Polysaccharid, Verdicker |
| 0,01 - 0,1 | Biocid |
| 50 - 80 | Wasser |

Mit der Sprühlösung wurden an Stelle der Reifenrohlinge die extrudierten Laufflächen, die mit Silicafüllstoffen hergestellt waren, beschichtet. Die damit hergestellten Reifen hatten einen elektrischen Widerstand im Bereich von 10⁶ Ohm.

## Patentansprüche

1. Wäßiges Außentrennmittel für Luftreifen, das einen Fettalkohol-Polyglykolether und leitfähigen Ruß enthält.

2. Wäßriges Außentrennmittel nach Anspruch 1 aus
| Anteile Gew.-% | |
|---|---|
| 3 - 20 | Amorphes Kieselgelpulver mit 3 - 70 % Kristallwasser, mittlerer Teilchendurchmesser 15 bis 30 µ |
| 0,2 - 2,0, | Progene Kieselsäure, mittlerer Teilchendurchmesser 8 bis 20 nm |
| 1 - 20 | Furnace-Ruß (Pulver, leitfähig) |
| | mittlerer Teilchendurchmesser 20 - 30 nm (kann durch |
| | Rußdispersion ersetzt werden) |
| oder | |
| 4 - 70 | Furnace-Rußdispersion (leitfähig) |
| | 25 % Furnace-Ruß mittlerer Teilchendurchmesser |
| | 20 - 30 nm |
| | 6 % Netzmittel nichtionisch |
| | 69 % Wasser |
| 0,3 - 15 | (berechnet als SiO₂) |
| | Kieselsol 15 - 50 Gew.-% SiO₂ |
| | Oberfläche 50 - 500 m²/g |
| | bevorzugt 200 m²/g |
| | mittlerer Teilchendurchmesser 6 - 40 nm |
| | bevorzugt 7 - 15 nm |
| 0 - 8 | Polyethylendispersion 25 %ig |
| 1 - 20 | Fettalkoholpolyglykolether, vorzugsweise |
| | C₁₆-C₁₈ -Alkohol + 5 Mol EO/Mol bis C₁₆-C₁₈-Alkohol + 80 Mol EO/Mol |
| 0,2 - 10 | Calciumligninsulfonat (Dispergiermittel) |
| 0,1 - 3 | Fettsäuremethyltaurid-Nathumsalz (Dispergiermittel) |
| 0 - 5 | Entschäumer |
| 0,01 - 0,05 | Biocid |
| 30 - 80 | Wasser |

3. Wässrige Außentrennmittel nach Anspruch 1 aus
| Anteile Gew.-% | % |
|---|---|
| 1 - 15 | Furnace-Ruß (Pulver, leitfähig) |
| | mittlerer Teilchendurchmesser 20 - 30 nm |
| oder | |
| 4 - 50 | Furnace-Rußdispersion (leitfähig) |
| | 25 % Ruß, 6 % Netzmittel nichtionisch |
| | 69 % Wasser |
| 1 - 6 | Fettalkoholpolyglykolether |
| | vorzugsweise C₁₆-C₁₈-Alkohol + 6 mol |
| | EO/Mol bis C₁₆-C₁₈-Alkohol + 80 mol |
| | EO/Mol |
| 0,5 - 15 | Kieselsol 15 - 50 Gew.-% SiO₂ (berechnet als SiO₂) |
| | 50 - 500 m²/g spezifische Oberfläche |
| | 6 - 40 nm mittlerer Teilchendurchmesser, vorzugsweise 200 m²/g spezifische Oberfläche, |
| | 40 nm mittlerer Teilchendurchmesser, bevorzugt 7 - 15 nm. Das Kieselsol ist ein kühlwasserbeständiges Bindemittel. |
| 0,01 - 0,2 | Polysaccharid, Verdicker |
| 0,01 - 0,1 | Biocid |
| 50 - 80 | Wasser |
